Europäisches Patentamt

European Patent Office

Office européen des brevets

(11) Veröffentlichungsnummer: **0 503 230 A1**

# EUROPÄISCHE PATENTANMELDUNG

(21) Anmeldenummer: **92100553.4**

(22) Anmeldetag: **15.01.92**

(51) Int. Cl.5: **A47J 31/44**, A47J 31/54, H05B 3/14

(30) Priorität: **08.03.91 DE 4107384**

(43) Veröffentlichungstag der Anmeldung: **16.09.92 Patentblatt 92/38**

(84) Benannte Vertragsstaaten:
**AT BE CH DE DK ES FR GB GR IT LI LU NL SE**

(71) Anmelder: **Melitta Haushaltsprodukte GmbH & Co. Kommanditgesellschaft Ringstrasse 99**
**W-4950 Minden 1(DE)**

(72) Erfinder: **Ropers, Rolf-Peter, Dipl.-Ing. Hans-Lüken-Str. 20**
**W - 4953 Petershagen(DE)**

(74) Vertreter: **Stracke, Alexander, Dipl.-Ing. et al Jöllenbecker Strasse 164**
**W-4800 Bielefeld 1(DE)**

(54) Kaffee- oder Teemaschine mit mindestens einem Heizaggregat.

(57) Eine Kaffee- oder Teemaschine mit mindestens einem Heizaggregat, beispielsweise zur Beheizung einer Warmhalteplatte (7) oder zur Erhitzung des Brühwassers gemäß vorliegender Erfindung ist gekennzeichnet durch die Verwendung eines Heizaggregates aus einer mehrschichtigen Heizfolie, die aus einer mittleren Schicht (8) aus in Kunststoff eingebetteten Kohlenstoffpartikeln sowie aus beidseitig darauf aufgebrachten, elektrisch leitfähigen Kunststoffolien (9) besteht.

Die Heizfolie ist außenseitig zweckmäßigerweise mit Isolierschichten (10) abgedeckt.

Die Heizfolie ist sehr dünn und kann somit platzsparend und problemlos als Heizaggregat eingesetzt werden.

Eine Steuerung zur Temperaturbegrenzung ist insoweit nicht erforderlich, als diese Steuerung von den Kohlenstoffpartikeln selbst übernommen wird, da diese als Widerstandselemente dienenden Kohlenstoffpartikel bei Erwärmung ihren Abstand und damit den Widerstand der Heizfolie vergrößern.

Fig. 2

Die vorliegende Erfindung betrifft eine Kaffee- oder Teemaschine mit mindestens einem Heizaggregat, beispielsweise zur Beheizung einer Warmhalteplatte, zur Erhitzung des Brühwassers od.dgl.

Bei Kaffee- oder Teemaschinen mit mindestens einem Heizaggregat werden bislang die Heizaggregate auf den jeweils spezifischen Anwendungsfall hin ausgelegt.

So werden beispielsweise für Durchlauferhitzer andere Heizaggregate eingesetzt als für die Beheizung von Warmhalteplatten.

Die verwendeten Heizaggregate sind häufig auch noch relativ groß, so daß bei der Konstruktion von Kaffee- oder Teemaschinen auf diesen erhöhten Platzbedarf Rücksicht genommen werden muß.

Häufig ist auch bei Heizaggregaten für Kaffee- oder Teemaschinen das Erfordernis gegeben, temperaturabhängige Steuerelemente vorzusehen um dafür zu sorgen, daß eine Überhitzung mit Sicherheit vermieden wird.

Der vorliegenden Erfindung liegt die Aufgabe zugrunde, die vorgeschilderten Nachteile insgesamt zu vermeiden und eine Kaffee- oder Teemaschine zu schaffen, bei der auf aufwendige Steuerungen des Heizaggregates oder der Heizaggregate verzichtet werden kann und bei deren Gestaltung nur äußerst geringe Rücksichten auf Größe und Form des Heizaggregates oder der Heizaggregate genommen werden müssen.

Zur Lösung dieser Aufgabe wird erfindungsgemäß die Verwendung eines Heizaggregates aus einer mehrschichtigen Heizfolie, die aus einer mittleren Schicht aus in Kunststoff eingebetteten Kohlenstoffpartikeln sowie aus beidseitig darauf aufgebrachten, elektrisch leitfähigen Kunststoffolien besteht, vorgeschlagen.

Die Verwendung einer derartigen Heizfolie bietet eine Vielzahl von Vorteilen.

Einerseits ist eine derartige Heizfolie äußerst flach und eignet sich schon von daher zu einer optimalen Anpassung an unterschiedliche Verwendungszwecke, ohne daß hierfür übermäßig Rücksicht auf Gestaltungen der zu beheizenden Teile genommen werden müssen. Außerdem ist eine derartige Heizfolie gewissermaßen gegen Überhitzungen selbst gesichert, da sich die Kohlenstoffpartikel, die als elektrische Widerstände dienen, bei Erwärmung in ihrem Abstand zueinander verändern und damit eine Widerstandsvergrößerung bewirken. Durch diese Widerstandsvergrößerung wird eine Überhitzung der Heizfolie auch ohne die Verwendung besonderer Steuerelemente vermieden.

Je nach Anwendungsfall kann es erforderlich sein, die Heizfolie außenseitig mit Isolierschichten abzudecken. Eine Isolierung kann aber auch geräteseitig vorgesehen werden.

Dies ist insbesondere dann von Bedeutung, wenn die Heizfolie mit anderen elektrisch leitfähigen Materialien in Kontakt gebracht wird. Beispielsweise kann das der Fall sein, wenn die Heizfolie zur Bildung eines Durchlauferhitzers benutzt wird.

Ein Ausführungsbeispiel der Erfindung ist in den beigefügten Zeichnungen dargestellt und wird im folgenden näher beschrieben. Es zeigen:

Fig. 1    eine schematisch dargestellte Kaffee- oder Teemaschine mit einem Durchlauferhitzer und einer Warmhalteplatte

Fig. 2    einen Vertikalschnitt durch die Warmhalteplatte mit darunter angordnetem Durchlauferhitzer

Fig. 3    die in Fig. 2 mit III bezeichnete Einzelheit in vergrößerter Schnittdarstellung.

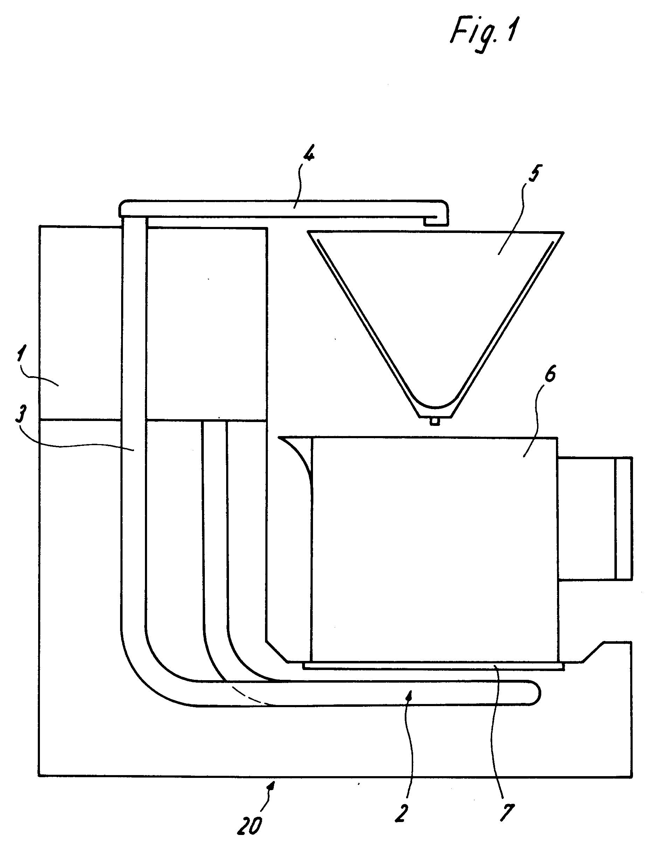

Die in Fig. 1 dargestellte, insgesamt mit dem Bezugszeichen 20 versehene Kaffee- oder Teemaschine weist einen Frischwasserbehälter 1, einen Durchlauferhitzer 2, ein Steigrohr 3, ein Überlaufrohr 4, ein Filtergefäß 5 und eine Kanne 6 auf.

Die Kanne 6 ist im Sockelbereich der Kaffee- oder Teemaschine 20 auf einer Warmhalteplatte 7 abgestellt. Nach dem bekannten Prinzip von Kaffee- oder Teemaschinen wird das im Frischwasserbehälter 1 bevorratete Wasser im Durchlauferhitzer 2 erhitzt, über das Steigrohr 3 und das Überlaufrohr 4 in das Filtergefäß 5 gefördert, von wo aus dann nach dem Auslaugen eines Aromaträgers wie Kaffee oder Tee das hergestellte Getränk in der Kanne 6 gesammelt wird. Das in der Kanne 6 befindliche Getränk wird dann durch die Warmhalteplatte 7 auf hoher Temperatur gehalten.

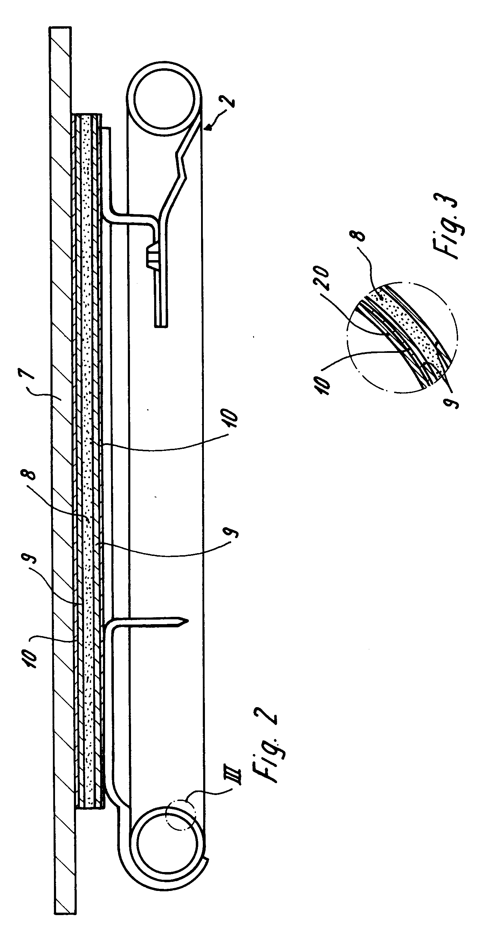

Wie Fig. 2 deutlich zeigt, sind die für den Betrieb des Durchlauferhitzers 2 und der Warmhalteplatte 7 erforderlichen Heizaggregate aus mehrschichtigen Heizfolien hergestellt.

Im Falle des Durchlauferhitzers 2 ist ein entsprechender Rohrabschnitt eines Metallrohres 20 mit einer derartigen mehrschichtigen Heizfolie ummantelt.

Sowohl für den Durchlauferhitzer 2 wie auch für die Warmhalteplatte 7 gilt, daß die mehrschichtige Heizfolie aus einer mittleren Schicht 8 aus in Kunststoff eingebetteten Kohlenstoffpartikeln sowie aus beidseitig auf diese mittlere Schicht 8 aufgebrachten, elektrisch leitfähigen Kunststoffolien 9 besteht. Vorteilhafterweise ist die Heizfolie außenseitig mit Isolierschichten 10 abgedeckt.

Die mehrschichtige Heizfolie ist insgesamt sehr dünn, so daß die für den Betrieb des Durchlauferhitzers 2 und/oder der Warmhalteplatte 7 erforderlichen Heizaggregate äußerst platzsparend sind. Die Heizfolie kann zur Ummantelung des Durchlauferhitzers 2 aus rohrförmigen Abschnitten bestehen.

Die mehrschichtige Heizfolie bietet darüber hinaus noch den Vorteil, daß Steuerelemente für eine notwendige Temperaturbegrenzung nicht erforderlich sind, da sich der Abstand der als Widerstände dienenden Kohlenstoffpartikel der mittleren Schicht 8 bei Erwärmung vergrößert, womit eine entsprechende Widerstandsvergrößerung einhergeht. Diese Widerstandsvergrößerung läßt die Temperatur nicht über ein vorbestimmtes Maß ansteigen.

Eine derartige mehrschichtige Heizfolie ist somit ein ideales Heizaggregat für Kaffee- oder Teemaschinen, da es sowohl platzsparend wie auch bezüglich eines Überhitzungsschutzes problemlos und ohne zusätzliche Steuerelemente einsetzbar ist.

## Patentansprüche

1. Kaffee- oder Teemaschine mit mindestens einem Heizaggregat, beispielsweise zur Beheizung einer Warmhalteplatte, zur Erhitzung des Brühwassers od.dgl., **gekennzeichnet durch** die Verwendung eines Heizaggregates aus einer mehrschichtigen Heizfolie, die aus einer mittleren Schicht (8) aus in Kunststoff eingebetteten Kohlenstoffpartikeln sowie aus beidseitig darauf aufgebrachten, elektrisch leitfähigen Kunststoffolien (9) besteht.

2. Kaffee- oder Teemaschine nach Anspruch 1, dadurch gekennzeichnet, daß die Heizfolie außenseitig mit Isolierschichten (10) abgedeckt ist.

*Fig. 1*

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-2 605 523 (MELITTA-WERKE BENTZ & SOHN)<br>* Seite 4, Absatz 1 -Absatz 3; Abbildung 4 *<br>--- | 1 | A47J31/44<br>A47J31/54<br>H05B3/14 |
| Y | US-A-4 833 305 (MASHIMO ET AL)<br>* Spalte 3, Zeile 21 - Spalte 5, Zeile 54; Abbildung 9 *<br>--- | 1 | |
| A | US-A-4 990 755 (NISHIMURA)<br>* Spalte 2, Zeile 33 - Spalte 3, Zeile 52; Abbildungen 1-4 *<br>----- | 1 | |
| | | | **RECHERCHIERTE SACHGEBIETE (Int. Cl.5)**<br><br>A47J<br>H05B |

Der vorliegende Recherchenbericht wurde für alle Patentansprüche erstellt

| Recherchenort | Abschlußdatum der Recherche | Prüfer |
|---|---|---|
| DEN HAAG | 25 JUNI 1992 | BODART P. |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
....................................................................
& : Mitglied der gleichen Patentfamilie, übereinstimmendes
   Dokument